Europäisches Patentamt

European Patent Office

Office européen des brevets

(19)

(11) Numéro de publication: **0 262 998 B1**

## FASCICULE DE BREVET EUROPEEN

(12)

(45) Date de publication de fascicule du brevet:
27.11.91

(51) Int. Cl.⁵: **B23B 47/28**

(21) Numéro de dépôt: 87401934.2

(22) Date de dépôt: 26.08.87

(54) **Dispositif pour le perçage de panneaux de bois en vue de leur assemblage par chevilles.**

(30) Priorité: **11.09.86 FR 8612711**
**16.02.87 FR 8701951**

(43) Date de publication de la demande:
**06.04.88 Bulletin 88/14**

(45) Mention de la délivrance du brevet:
**27.11.91 Bulletin 91/48**

(84) Etats contractants désignés:
**DE ES GB IT NL**

(56) Documents cités:
**EP-A- 0 136 080**
**FR-A- 2 289 305**
**FR-A- 2 408 440**

(73) Titulaire: **LA FRANCAISE METALLURGIE**
**15, place de la Nation**
**F-75011 Paris(FR)**

(72) Inventeur: **Fallon, Régis**
**40, rue Charles Ollier**
**F-94170 Le Perreux Sur Marne(FR)**

(74) Mandataire: **Netter, André et al**
**Cabinet NETTER, 40, rue Vignon**
**F-75009 Paris(FR)**

## Description

L'invention concerne un dispositif de guidage pour le perçage de panneaux de bois ou analogues en vue de leur assemblage par chevilles, notamment de leur assemblage en L avec affleurement, selon le préambule de la revendication 1, vois EP-A-0 136 080.

Selon un procédé courant pour un tel assemblage, on fixe l'un par rapport à l'autre, face contre face, les deux panneaux à assembler et on perce successivement, dans un ordre arbitraire, un chant d'un premier panneau et une face du second panneau au voisinage de l'un de ses chants, à l'aide d'un dispositif de guidage maintenu solidaire des panneaux.

On appelle ici "face" chacune des deux faces principales d'un panneau, et "chant" chacune des faces joignant les faces principales.

Avec la plupart des dispositifs de guidage connus, le chant à percer du premier panneau et le chant voisin de la zone de perçage du second panneau sont disposés dans un même plan, et le perçage du second panneau se fait dans sa face opposée au premier panneau. Il en résulte que, pour faire passer les panneaux de leur position de perçage à leur position d'assemblage, il faut les faire tourner l'un par rapport à l'autre de 270° pour amener la face percée du second panneau en regard du chant percé du premier panneau. Ce mouvement s'est révélé difficile à exécuter dans le cas de panneaux de grandes dimensions ou dans le cas d'un assemblage complexe comportant une multiplicité de panneaux à assembler entre eux.

Le Brevet EP-A-0 136 080 divulgue un procédé du type défini en introduction, dans lequel lesdits chants des deux panneaux sont disposés parallèlement et décalés l'un par rapport a l'autre et ladite face du second panneau est celle en contact avec le premier panneau, cette face étant percée dans sa zone laissée découverte par le décalage du chant du premier panneau.

Après mise en oeuvre de ce procédé, il suffit d'une rotation relative de 90° pour amener les panneaux en position d'assemblage.

Le but de l'invention est de fournir un dispositif de guidage perfectionné pour la mise en oeuvre de ce procédé.

L'invention vise un dispositif selon la revendication 1.

Selon une caractéristique de l'invention, l'élément guide présente un rebord pouvant s'appuyer sur la face du premier panneau opposée au second panneau de façon à positionner les axes des canons de perçage à une distance déterminée de ladite face opposée.

On peut prévoir également la mise en place de l'élément guide sur l'élément support avec les canons de perçage en regard de la face à percer du second panneau. Il est alors avantageux que le rebord vienne s'appuyer sur le chant du second panneau.

L'élément guide peut être reçu dans un même logement ou dans des logements différents de l'élément support pour ses positions respectives de perçage des deux panneaux.

Dans une variante du dispositif, l'élément support est également propre à reposer de façon stable sur ladite face du second panneau, pour le perçage de celle-ci à une distance de son chant supérieure à ladite distance déterminée, en s'appuyant sur le chant percé du premier panneau fixé à plat sur ladite face, et à y recevoir l'élément guide qui comporte deux canons de perçage, reposant également de façon stable sur cette face avec les canons de perçage en regard de celle-ci, et l'élément support présente en outre deux moyens d'appui latéraux qui, dans la position ainsi définie, sont adjacents à ladite face et définissent des plans d'appui tangents respectivement aux alésages des canons de perçage et perpendiculaires au chant du premier panneau, la distance entre les plans d'appui étant égale à l'entr'axe des canons de perçage diminué du diamètre de leur alésage.

Selon un mode de réalisation, les deux moyens d'appui latéraux sont situés sur deux côtés opposés de l'élément support.

Chaque moyen d'appui peut notamment être une portion de surface externe de l'élément support contenue dans le plan d'appui.

De préférence, l'élément support est propre à s'appuyer sur la face du second panneau et sur le chant du premier panneau par des portions de surface externes planes perpendiculaires entre elles.

Dans le cas où l'élément guide présente un rebord parallèle aux axes des canons de perçage et pouvant s'appuyer sur la face du premier panneau opposée au second panneau, lors du perçage du chant du premier panneau, de façon à positionner les axes des canons de perçage à une distance déterminée de ladite face opposée, cet élément guide est de préférence reçu à plat sur la face du second panneau, le rebord étant dirigé à l'opposé du second panneau, pour le perçage de celui-ci loin de son chant.

Selon une caractéristique avantageuse, l'élément support présente une arête qui vient en contact avec la face du second panneau, dans un plan parallèle au chant du premier panneau et passant par les axes des canons de perçage de l'élément guide.

D'autres caractéristiques et avantages de l'invention ressortiront de la description détaillée de quelques exemples de réalisation et des dessins annexés dans lesquels :

- la figure 1 est un schéma montrant le mouvement relatif à exécuter pour amener deux panneaux en position d'assemblage après leur perçage par le procédé classique;
- la figure 2 est un schéma analogue à la figure 1 relatif au procédé mis en oeuvre à l'aide du dispositif selon l'invention;
- la figure 3 est une vue en élévation d'un mode de réalisation d'un dispositif selon l'invention mis en place sur deux panneaux à percer;
- les figures 4 et 5 sont des vues respectivement de dessus et de côté du même ensemble;
- la figure 6 est une vue de côté d'un élément du dispositif;
- les figures 7 et 8 sont des coupes schématiques montrant les positions de l'élément guide pour le perçage des deux panneaux respectivement;
- la figure 8A est une vue analogue à la figure 8, relative a une variante d'utilisation;
- la figure 8B est une vue en perspective montrant l'utilisation du dispositif dans le cas d'un assemblage en T;
- la figure 9 est une vue en perspective montrant l'élément support d'un autre dispositif selon l'invention, monté sur deux panneaux à percer;
- les figures 10 et 11 sont des vues analogues à la figure 9, dans lesquelles l'élément guide est mis en place dans les positions de perçage des deux panneaux respectivement;
- les figures 12 et 13 sont des vues en perspective respectivement des deux éléments constitutifs d'un autre mode de réalisation du dispositif selon l'invention;
- les figures 14 et 15 sont des vues en perspective respectivement de l'élément support et de l'élément guide d'un autre dispositif selon l'invention;
- la figure 16 est une vue en coupe du même dispositif dans la position de perçage du chant du premier panneau;
- la figure 17 est une vue en élévation, partiellement en coupe, du dispositif en position de perçage de la face du second panneau loin du chant de celui-ci.

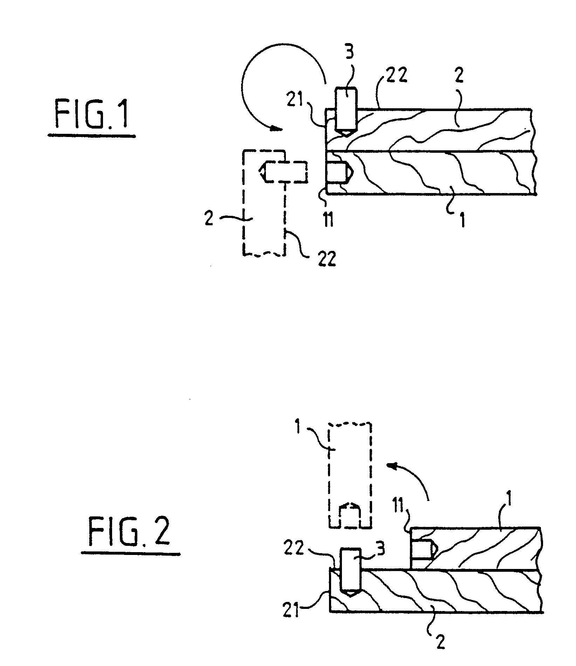

On a représenté en trait plein à la figure 1 deux panneaux de bois 1 et 2 dans la position relative où ils se trouvent après perçage par le procédé classique décrit au début. Les deux panneaux sont disposés face contre face, leurs chants respectifs 11 et 21 étant coplanaires. Les trous sont percés dans le chant 11 du panneau 1 et dans la face 22 du panneau 2 opposée au panneau 1, au voisinage du chant 21. On a représenté également une cheville d'assemblage 3 introduite dans un trou du panneau 2.

Comme indiqué par la flèche, il est nécessaire de faire tourner le panneau 2 de 270°, en supposant que le panneau 1 reste fixe, pour l'amener dans la position indiquée en trait interrompu de façon à pouvoir assembler les deux panneaux par introduction des chevilles 3 dans les trous du panneau 1.

Au contraire, comme le montre la figure 2, après perçage au moyen du dispositif selon l'invention, la face percée 22 du panneau 2 est en contact avec le panneau 1, et il suffit d'un mouvement relatif d'un quart de tour pour amener par exemple le panneau 1 dans la position représentée en trait interrompu de façon à pouvoir assembler les deux panneaux.

Il va de soi que, dans un procédé comme dans l'autre, les chevilles peuvent être introduites initialement aussi bien dans le panneau 1 percé sur son chant que dans le panneau 2 percé sur sa face.

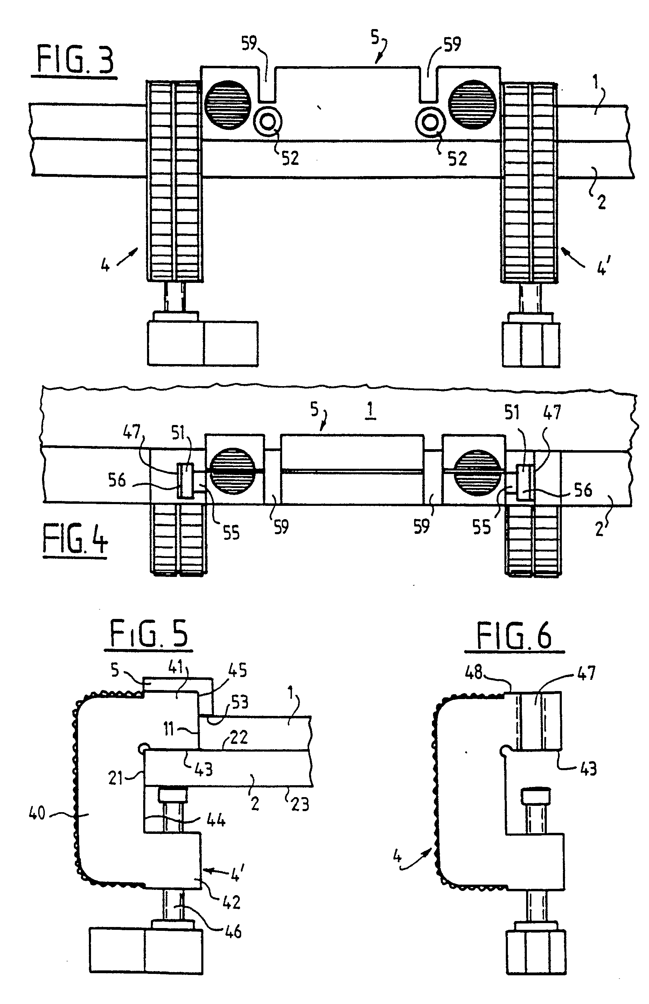

Le dispositif de guidage de perçage représenté aux figures 3 à 5 comprend deux éléments supports 4 et 4' et un élément guide 5. Les éléments supports sont du type serre-joint et comportent chacun un corps en forme de C présentant un dos 40 et deux branches 41 et 42. La face interne 43 de la branche 41 s'appuie sur la face à percer 22 du panneau 2, tandis que la face interne 44 du dos 40, perpendiculaire à la face 43, s'appuie sur le chant 21 du panneau 2. Le chant 11 du panneau 1 vient quant à lui s'appuyer sur la face d'extrémité 45 de la branche 41. Une tige filetée 46 d'axe perpendiculaire aux faces des panneaux et coopérant avec un trou fileté de la branche 42 vient s'appuyer sur la face 23 du panneau 2 opposée au panneau 1 pour immobiliser l'élément support 4 ou 4' dans la position qui vient d'êter définie.

Chaque élément support 4 ou 4' présente une rainure de logement 47 ménagée dans la branche 41 et s'ouvrant dans la face de celle-ci tournée vers l'autre élément support. Les rainures 47 sont orientées perpendiculairement aux faces des panneaux et débouchent dans la face interne 43 et dans la face opposée 48 de la branche 41.

Les rainures 47 sont destinées à coopérer avec des oreilles 51 de l'élément guide 5 pour assurer le positionnement angulaire et longitudinal de ce dernier et permettre son coulissement dans la direction perpendiculaire aux faces des panneaux. L'élément guide 5 est une pièce allongée dans la direction longitudinale des chants 11 et 21 des panneaux et aux deux extrémités de laquelle font saillie respectivement les deux oreilles 51.

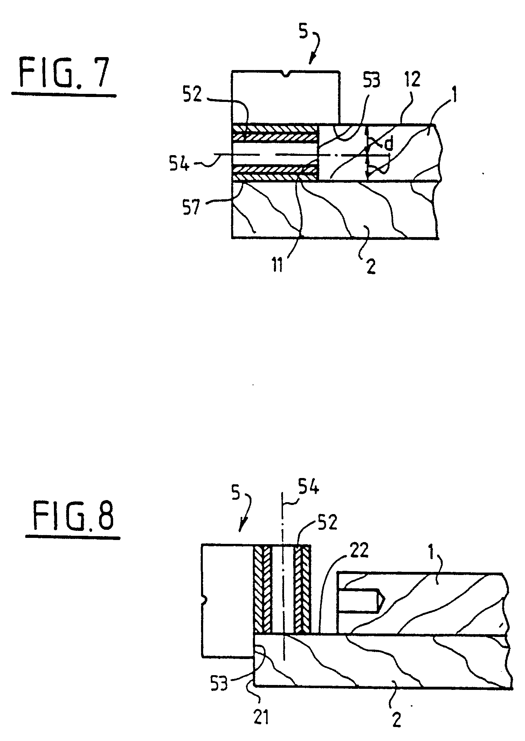

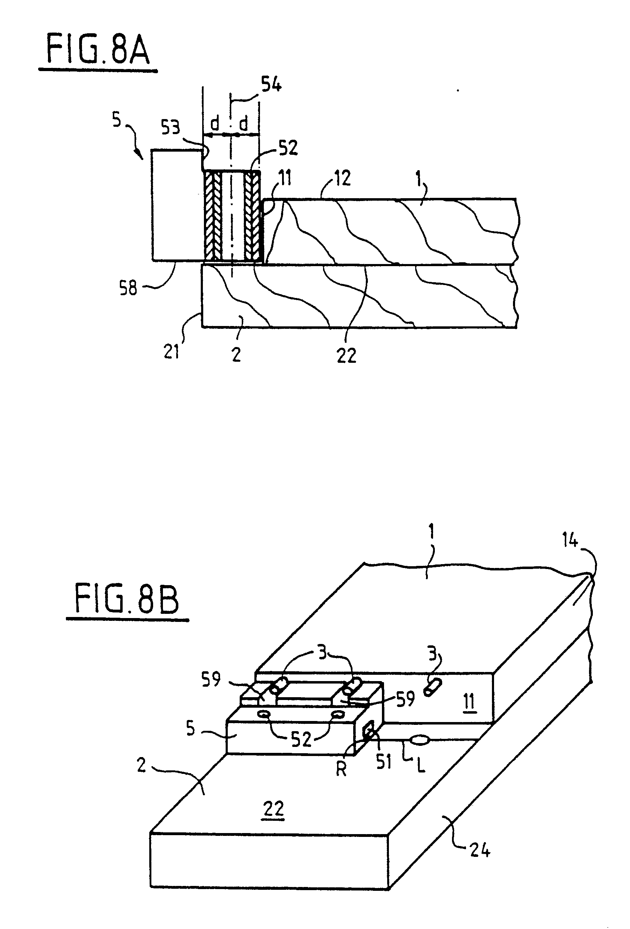

L'élément guide 5 est muni de deux canons de perçage 52 dont les alésages le traversent perpendiculairement à sa longueur. La pièce 5 présente en section transversale, comme on le voit aux figures 7 et 8, un décrochement définissant un rebord 53 parallèle aux axes 54 des canons de perçage.

Chaque oreille 51 est formée d'une tige 55 et d'une partie d'extrémité 56 de section transversale plus grande que celle de la tige, cette section transversale de la partie 56 étant de forme carrée. Les rainures 47 des éléments supports ont un profil conjugué de celui des oreilles 51, de sorte que les oreilles ne peuvent être engagées dans les rainures que lorsque deux côtés du carré de la partie d'extrémité 56 d'une oreille sont parallèles à la direction de la rainure 47. Dans ces conditions, le seul mouvement possible de l'élément guide par rapport aux éléments supports est un mouvement de coulissement dans la direction des rainures 47.

La coopération des oreilles 51 et des rainures 47 définit également la distance mutuelle des éléments supports 4 et 4'.

Il ressort de ce qui précède que l'élément guide 5 peut être mis en place sur les éléments supports 4 et 4' dans deux orientations pour lesquelles les axes 54 des canons de perçage sont respectivement perpendiculaires aux chants 11 et 21 et aux faces des panneaux. Dans le premier cas, comme on le voit à la figure 7, les canons de perçage viennent en regard du chant à percer 11 du panneau 1, le rebord 53 venant en appui sur la face 12, opposée au panneau 2, du panneau 1. Cette position permet de percer dans le chant 11 du panneau 1 des trous dont les axes sont à une distance donnée d de la face 12 égale à la distance séparant les axes des canons de perçage du plan du rebord 53. C'est cette position qui est également illustrée aux figures 3 à 5. Dans la seconde position, les extrémités des canons de perçage viennent en regard de la face à percer 22 du panneau 2, le rebord 53 étant en contact avec le chant 21 de ce même panneau. Des trous peuvent ainsi être percés dans la face 22 à la distance d du chant 21. La coïncidence du plan du rebord 53 et du plan du chant 21, c'est-à-dire de celui de la face 44 des éléments supports, résulte des dimensions de l'élément guide 5 et de la position des rainures 47. Après assemblage des panneaux par chevilles, la face 12 et le chant 21 seront situés dans un même plan.

Comme on le voit à la figure 7, la face 57 de l'élément guide 5 tourné vers le panneau 2 dans la position de perçage du panneau 1 est également à la distance d des axes 54 des canons de perçage. Lorsque, comme dans l'exemple représenté, l'épaisseur du panneau 1 est égale à 2d, la face 57 vient alors en contact avec la face 22 du panneau 2, et le panneau 1 est percé à mi-épaisseur. Il est également possible de percer des panneaux d'une épaisseur supérieure à 2d, l'élément guide 5 venant alors en contact avec le seul panneau 1 par le rebord 53 et la face 57 restant écartée du panneau 2. Dans ce cas, le panneau 1 est percé de façon décentrée par rapport à son épaisseur, sans que l'affleurement des panneaux après assemblage en soit affecté.

Il est possible de prévoir, adaptable sur une même paire d'éléments supports 4 et 4', différents éléments guides 5 destinés à percer des panneaux dans des gammes d'épaisseurs différentes, et possédant par conséquent des distances d différentes et éventuellement des canons de perçage présentant des diamètres intérieurs et/ou des entr'axes différents.

Pour être percés au moyen du dispositif décrit, les deux panneaux doivent être fixés l'un par rapport à l'autre face contre face avec le chant 11 parallèle au chant 21 et en retrait par rapport à celui-ci. On peut s'aider du dispositif pour réaliser le positionnement relatif des deux panneaux, par exemple en fixant les deux éléments supports sur le panneau 2 avec leurs faces 44 en appui sur le chant 21, puis en amenant le chant 11 du panneau 1 en butée sur les faces 45 des éléments supports. Après fixation relative des panneaux par des moyens appropriés, le dispositif peut être démonté et remonté successivement en différents endroits pour réaliser les perçages voulus le long des chants des panneaux.

Le passage de la position représentée à la figure 7 à celle représentée à la figure 8 nécessite un retournement extrémité pour extrémité de l'élément 5, l'oreille 51 qui était engagée dans la rainure 47 de l'élément 4 venant dans celle de l'élément 4', et inversement. Mais il est également possible, après perçage du panneau 1, de soulever l'élément 5 pour le dégager des rainures 47, de le faire tourner d'un quart de tour autour de l'axe des oreilles et de l'engager de nouveau dans les rainures 47 de façon à l'amener dans la position représentée à la figure 8A. Les emplacements des axes des canons de perçage 52 sont les mêmes dans la position de la figure 8A que dans celle de la figure 8, la coopération des oreilles 51 et des rainures 47 assurant que la distance entre ces axes et le chant 21 reste égale à d.

On peut encore simplifier le mouvement de l'élément 5 en donnant à la section transversale des oreilles 51 une forme circulaire d'un diamètre égal à la largeur des rainures 47. L'élément 5 peut alors tourner de la position de la figure 7 à celle de la figure 8A sans qu'il soit nécessaire de faire sortir les oreilles des rainures et de les y réintroduire. Dans ce cas, la perpendicularité des axes 54 par rapport au chant 11 du panneau 1 dans la position de perçage de ce dernier est assurée par l'appui du rebord plan 53 sur la face 112. La perpendicularité des axes 54 par rapport à la face 22 du panneau 2, dans la position de perçage de ce dernier, est assurée par l'appui sur cette face de la face 58 de l'élément 5, perpendiculaire aux axes 54 et non adjacents au rebord 53.

Le dispositif illustré permet également le perçage de panneaux en vue de l'assemblage en T. L'élément 5 présente à cet effet deux rainures transversales 59, ménagées dans l'une de ses faces longitudinales parallèles aux axes 54 des canons de perçage, et dont l'étendue dans la direction longitudinale de l'élément 5, c'est-à-dire dans la direction de leur propre largeur, coïncide avec celle des alésages des canons de perçage.

Après avoir percé le chant 11 du panneau 1 comme décrit ci-dessus, on introduit dans les trous ainsi réalisés les chevilles d'assemblage 3 (figure 8B) et on pose l'élément guide 5 sur la face à percer 22 du panneau 2 de façon que la face de l'élément guide présentant les rainures 59 s'appuie contre le chant 11, les chevilles 3 s'engageant dans les rainures 59. Les panneaux 1 et 2 étant convenablement positionnés l'un par rapport à l'autre dans la direction longitudinale du chant 11, par exemple par le fait qu'un chant 14 du panneau 1 perpendiculaire au chant 11 et un chant 24 du panneau 2 sont coplanaires, on fait glisser l'ensemble formé par le panneau 1 et par l'élément guide 5 sur le panneau 2 dans la direction des axes des trous du panneau 1 de façon à amener un repère R, prévu à l'une au moins des extrémités de l'élément 5, dans le plan des axes des canons de perçage 52, en coïncidence avec une ligne droite L, préalablement tracée sur la face 22 du panneau 2 pour marquer les emplacements des trous à percer dans celle-ci. Les canons de perçage 52 sont alors dans la position appropriée pour le perçage des trous devant recevoir les chevilles 3 engagées dans les rainures 59.

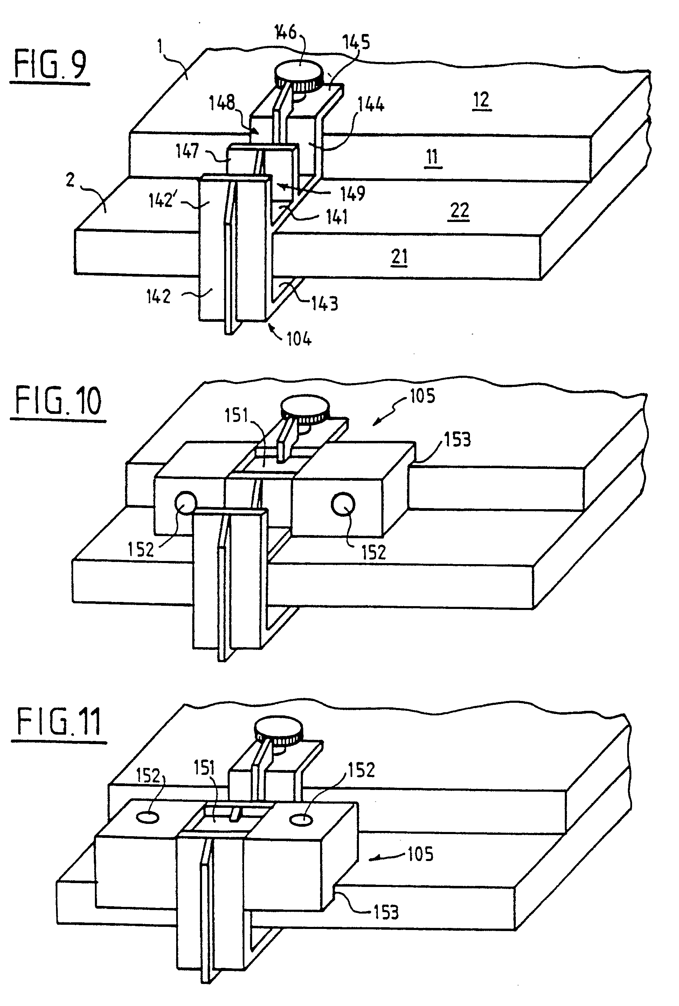

Le dispositif illustré aux figures 9 à 11 comprend un seul élément support 104 et un élément guide 105. L'élément support 104 comprend une semelle 141 destinée à reposer sur la face à percer 22 du panneau 2 en s'étendant entre le chant 21 de celui-ci et le chant 11 du panneau 1. La semelle 141 constitue l'une des branches d'un serre-joint dont le dos 142 s'appuie sur le chant 21 et dont la branche opposée 143 s'étend en regard de la face du panneau 2 opposée à la face 22. La branche 143 est traversée par une vis non visible sur les dessins, permettant de serrer le panneau 2 contre la semelle 141. A l'extrémité de cette dernière opposée au dos 142 se raccorde une portion 144 de l'élément 104 qui est en contact avec le chant 11 du panneau 1 et qui se prolonge à son tour, parallèlement aux faces des panneaux, par une patte 145 au travers de laquelle s'engage une vis de serrage 146 dont l'extrémité s'appuie sur la face 12 du panneau 1. L'élément 104 fixe donc la position relative des panneaux 1 et 2 sans qu'il soit nécessaire de recourir à des moyens indépendants à cet effet.

Le dos 142 du serre-joint se prolonge au-delà de la semelle 141 en formant une branche 142' qui va en s'éloignant du plan de la face 22. De la semelle 141 dépend également une branche intermédiaire 147 qui s'étend à peu près à mi-distance entre la portion 144 et la branche 142' en s'éloignant elle aussi du plan de la face 22. L'élément support 104 forme ainsi deux logements, un logement 148 compris entre la portion 144 et la branche 147, et un logement 149 compris entre les branches 147 et 142'. Chacun de ces logements peut recevoir un même élément guide 105 semblable dans sa forme générale à l'élément guide 5 des figures 3 à 5, mais dans lequel les oreilles 51 sont supprimées et remplacées par des évidements médians 151 propres à coopérer avec la semelle 141 et les branches 144, 147 et 142' pour immobiliser l'élément 105 en rotation et en translation dans la direction longitudinale des chants des panneaux, tout en permettant son introduction et son coulissement dans la direction perpendiculaire aux faces des panneaux. Les formes de l'élément support 104 et des évidements 151 de l'élément guide 105 coopèrent de façon à permettre la mise en place de ce dernier dans deux positions. Dans la première de ces positions, illustrée par la figure 10, l'élément guide est engagé dans le logement 148 avec les canons de perçage 152 en regard du chant 11 du panneau 1, le rebord 153 s'appuyant sur la face 12 de ce dernier. Dans la seconde position, illustrée à la figure 11, l'élément guide pénètre dans le logement 149, les canons de perçage 152 étant en regard de la face 22 du panneau 2 et le rebord 153 s'appuyant sur le chant 21 de ce dernier.

11 est clair que les schémas des figures 7 et 8 et les explications correspondantes s'appliquent également aux dispositifs des figures 9 à 11, à ceci près que, dans la position de perçage du panneau 11, l'élément guide est éloigné du chant 21 du panneau 2. En conséquence, pour une même épaisseur des panneaux et une même distance d, le décalage mutuel des chants 11 et 21 est plus grand avec le dispositif des figures 9 à 11 qu'avec celui des figures 3 à 5.

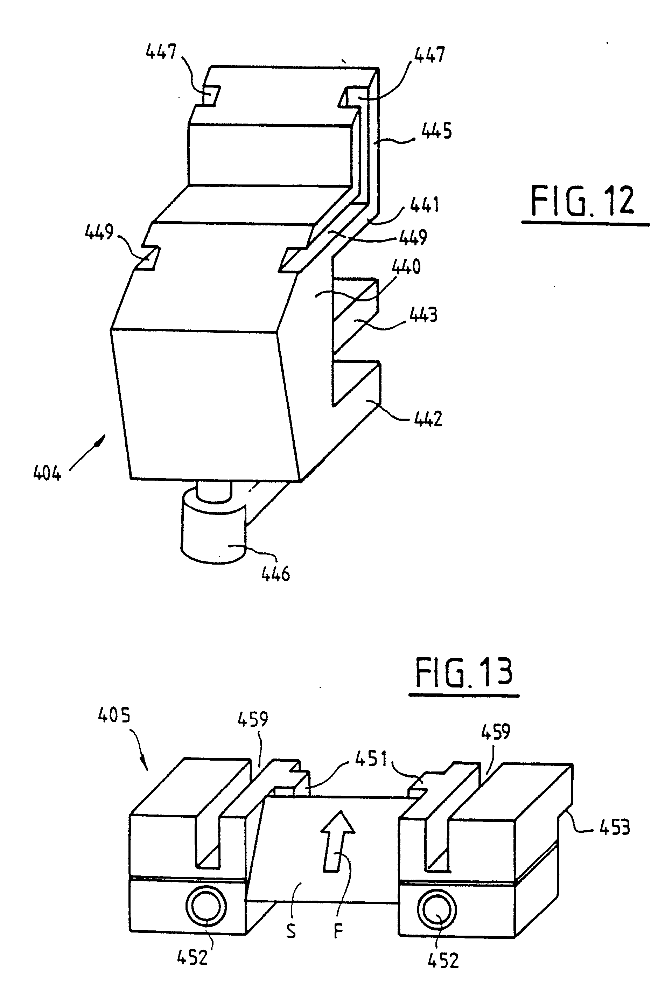

Le dispositif représenté aux figures 12 et 13 est composé d'un élément support 404 et d'un élément guide 405. L'élément support 404 présente une structure de serre-joint avec un dos 440 destiné à venir en appui contre le chant 21 du panneau 2, une branche 441 venant en appui sur la face 22 de ce même panneau et une branche 442 traversée par une vis de serrage 446. L'extrémité intérieure de la vis 446 est emprisonnée dans une plaque 443 parallèle aux branches 441 et 442, par rapport à laquelle elle peut tourner mais ne peut pas se déplacer en translation. La plaque 443 peut par ailleurs coulisser, perpendiculairement à son propre plan, par rapport au dos 440 du serre-joint. Le panneau 2 à percer peut ainsi être serré entre la branche 441 et la plaque 443, laquelle améliore la stabilité de la liaison.

L'élément support 404 présente en outre, raccordée à la branche 441, et perpendiculaire à celle-ci, une branche 445 qui va en s'éloignant de la branche 442, et sur laquelle doit venir s'appuyer le chant à percer 11 du panneau 1. Dans les faces latérales des branches 441 et 445 sont ménagées des rainures 449 et 447 respectivement qui s'étendent parallèlement aux plans de ces branches et par conséquent perpendiculairement les unes aux autres. Ces rainures sont destinées à recevoir des nervures 451 appartenant à l'élément guide 405 et qui s'étendent perpendiculairement aux canons de perçage 452 de celui-ci. L'élément 405 présente également des rainures 459 et un rebord 453 semblable aux éléments 59 et 53 respectivement de l'élément 5 des figures 3 et 4.

La coopération des nervures 451 avec les rainures 447 et 449 définit deux positions possibles de l'élément guide 405 sur l'élément support 404. Dans la première position, les nervures 451 s'engagent dans les rainures 447 jusqu'à ce que le rebord 453 vienne en appui sur la face 12 du panneau 1. Les canons de perçage 452 sont alors orientés perpendiculairement au chant 11 du panneau 1 pour le perçage de celui-ci. Dans la seconde position, les nervures 451 s'engagent dans les rainures 449 jusqu'à ce que le rebord 453 vienne en appui sur le chant 21 du panneau 2. Les canons de perçage 452 sont alors orientés perpendiculairement à la face 22 de ce dernier pour le perçage de celle-ci. Une flèche F tracée sur une surface oblique S de l'élément guide 405 désigne celui des panneaux qui peut être percé dans la position où l'élément se trouve.

Tous les exemples de réalisation décrits ci-dessus comprennent des éléments guides munis de deux canons de perçage. Le perçage de plus de deux trous dans chaque panneau nécessite des démontages et remontages successifs du dispositif sur les panneaux. Bien entendu, il est possible de prévoir des dispositifs dans lesquels le ou les éléments guides présentent un nombre arbitraire de canons de perçage.

L'élément guide 105 des figures 9 à 11 peut être muni de rainures et de repères semblables aux rainures 59 et au repère R de l'élément 5 pour le perçage d'une face d'un panneau a distance de ses chants en vue d'un assemblage en L.

Outre des dispositifs comprenant, comme aux figures 3 à 5, deux éléments supports présentant chacun un logement unique pour un élément guide unique, et des dispositifs comprenant, comme représenté aux figures 9 à 13, un élément support unique présentant deux logements pour un élément guide unique, l'invention englobe également des dispositifs comprenant un élément support unique muni d'un logement unique pour un élément guide unique, ou deux éléments supports présentant chacun deux logements pour un élément guide unique.

Comme il a été exposé, outre le perçage du second panneau au voisinage de son chant en vue d'un assemblage des deux panneaux en L, certains des dispositifs décrits permettent le perçage du second panneau loin de son chant en vue de l'assemblage des deux panneaux en T.

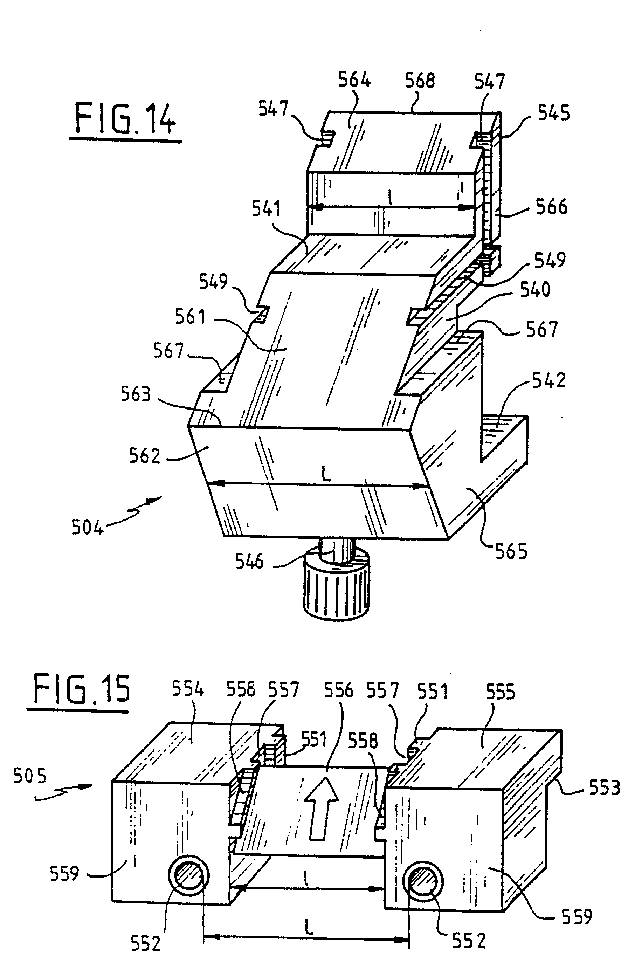

Le dispositif des figures 14 à 17 a été plus particulièrement conçu pour une telle application, de façon à pouvoir se positionner plus facilement et de manière plus stable sur la face du second panneau.

Le dispositif illustré a une structure générale semblable à celle du dispositif des figures 12 et 13. Il est composé d'un élément support 504 et d'un élément guide 505. L'élément support 504 forme un serre-joint qui peut être fixé sur le bord d'un panneau de bois 2, comme représenté à la figure 18. Le serre-joint présente un dos 540 destiné à venir en appui contre le chant 21 du panneau 2, une branche supérieure 541 destinée à venir en appui contre la face supérieure 22 de ce panneau et une branche inférieure 542 traversée par une vis de serrage 546. L'extrémité interne de la vis 546 est munie d'un embout 543 qui, lors du vissage, vient s appuyer contre la face inférieure 23 du panneau 2.

L'élément support 504 présente en outre, raccordée à la branche 541 et perpendiculaire à celle-ci, une branche 545 qui va en s'éloignant de la branche 542, et sur laquelle vient s'appuyer, comme montré à la figure 18, le chant à percer 11 d'un panneau 1 posé à plat sur la face 22 du panneau 2.

La face externe du dos 540 présente deux portions de surface planes 561 et 562, obliques par rapport à la direction de serrage du serre-joint et perpendiculaires l'une à l'autre, définissant une arête convexe 563 parallèle aux faces internes du dos 540 et de la branche 541. La face d'extrémité 564 de la branche 545 est dans le même plan que la portion de surface 561 du dos.

La branche 542, et le dos 540 sur une partie de sa hauteur à partir de celle-ci, sont limités latéralement par deux portions de surface planes opposées 565, dont l'une est visible sur les figures 14, 16 et 17, toutes deux perpendiculaires aux portions de surface 561 et 562. Chacune d'elles forme donc avec ces dernières un trièdre trirectangle. Les branches 541 et 545 et la partie supérieure du dos 540 sont limitées latéralement par des portions de surface opposées 566, parallèles aux portions 565 et définissant entre elles une largeur $\underline{1}$

inférieure à la largeur L définie par les portions de surface 565. Les portions de surface 566 sont reliées aux portions de surface 565 par des décrochements 567. Dans les portions de faces latérales 566 sont ménagées des rainures 547 le long de la branche 545 et parallèlement à la direction de celle-ci, et des rainures 549 le long de la branche 541 et parallèlement à celle-ci.

L'élément guide 505 (figure 15) comprend deux blocs 554 et 555 reliés entre eux par un pontet 556, chacun des blocs 554 et 555 étant traversé par un canon de perçage 552. Les alésages des canons de perçage ont le même diamètre et ont des axes parallèles entre eux. Les faces respectives 557, tournées l'une vers l'autre, des blocs 554 et 555 sont planes, parallèles entre elles et parallèles aux axes des canons de perçage, et perpendiculaires au plan contenant ces axes. Les faces 557 sont à une distance mutuelle égale à la largeur 1 de l'élément support. Par ailleurs, l'entr'axe des canons de perçage est égal à la largeur L augmentée du diamètre des alésages, c'est-à-dire que la distance séparant les deux alésages est égale à L.

Chacun des blocs 554 et 555 présente, en saillie sur sa face 557, une nervure 551 s'étendant perpendiculairement aux axes des canons de perçage, et une nervure oblique 558, le profil des nervures 551 et 558 correspondant à celui des rainures 547 et 549 de l'élément support. Enfin, chacun des blocs 554 et 555 présente, dans une de ses faces où débouche le canon de perçage, un rebord 553 parallèle au plan des axes des canons de perçage.

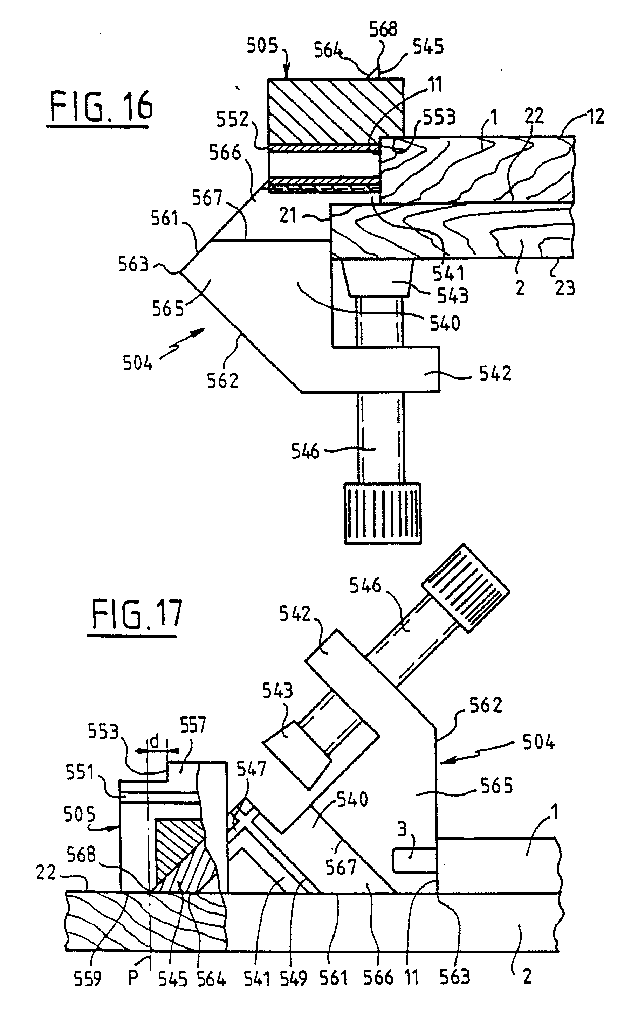

Pour percer le chant 11 du panneau 1, comme montré à la figure 16, on place l'élément guide 505 sur l'élément support 504 de façon que les blocs 554 et 555 viennent de part et d'autre des branches 541 et 545 de l'élément support, les faces 557 coopérant avec les portions de faces 566 et les nervures 551 s'engageant dans les rainures 547. Le rebord 553 vient reposer sur la face supérieure 12 du panneau 1, la position de l'élément guide par rapport à l'élément support variant ainsi en fonction de l'épaisseur de ce panneau, grâce au coulissement des nervures dans les rainures. Les canons de perçage 552 sont alors positionnés en regard du chant 11 du panneau 1 pour le perçage de celui-ci. Pour favoriser le guidage de l'élément guide sur l'élément support, on peut prévoir que l'une des faces du pontet 556 reliant les blocs 554 et 555 coopère avec la face arrière de la branche 545.

Après perçage du panneau 1, pour percer la face 22 du panneau 2 au voisinage de son chant 21, il suffit de soulever l'élément guide 505 pour le dégager de l'élément support, de le faire tourner sur lui-même pour échanger les positions des blocs 554 et 555, et de l'engager de nouveau, selon un mouvement horizontal, sur l'élément support, les nervures 551 venant cette fois coulisser dans les rainures 549. Grâce à l'utilisation des mêmes canons de perçage 552, on obtient le même entr'axe pour les perçages du panneau 2 que pour les perçages du panneau 1. De plus, la distance entre les axes des perçages du panneau 1 et la face 12 d'une part et la distance entre les axes des perçages du panneau 2 et le chant 21 d'autre part sont toutes deux égales à la distance d (figure 17) entre le rebord 553 et les axes des canons de perçage, ce qui permet un assemblage en L parfaitement net.

La figure 17 montre la position du dispositif dans le cas ou on désire percer la face 22 du panneau 2 à une distance de son chant supérieure à d, en vue d'un assemblage en T avec le panneau 1 percé dans son chant 11. Auparavant, on a percé le panneau 1 par la disposition selon la figure 16, le panneau 2 pouvant être remplacé dans celle-ci par un support plat quelconque, par exemple une table de travail. A la figure 17, l'élément support 504 repose sur la face 22 du panneau 2 par ses portions de face coplanaires 561 et 564. L'élément guide 505 coopère avec l'élément support de façon que ses nervures 558 s'engagent dans les rainures 547, et repose également de façon stable sur la face 22 par ses faces 559 perpendiculaires aux axes des canons de perçage et opposée à celles qui présentent les rebords 553. L'arête 568 du dièdre aigu formé par la portion de face 564 et la face de la branche 545 tournée vers le haut se trouve alors dans le plan P des axes des canons de perçage.

Le panneau 1, dont les perçages ont reçu des chevilles d'assemblage 3, repose à plat sur la face 22 du panneau 2, son chant 11 venant s'appuyer sur la portion de face 562 de l'élément guide. L'écartement mutuel des deux chevilles 3 introduites dans les trous qui ont été réalisés au moyen de l'élément guide leur permet de venir dans des positions tangentes respectivement aux portions de faces 565 de l'élément support, ces portions de face étant adjacentes et perpendiculaires aux portions de face 561 et 562 et par conséquent à la face 22 et au chant 11. Les axes des trous qui seront percés dans le panneau 2 seront ainsi aux mêmes distances que les trous du panneau 1 par rapport à un plan de référence parallèle aux faces 565.

Il est par ailleurs commode de faire coïncider l'arête 568 avec une ligne tracée à l'avance sur la face 22 du panneau 2, et selon laquelle doivent être alignés les axes des trous à percer.

Des changements peuvent être apportés à ce dernier exemple sans sortir du cadre de l'invention. En particulier, le dispositif peut comprendre, comme décrit précédemment, un premier élément guide destiné au perçage du chant 11 du panneau 1, et un second élément guide destiné au perçage de la face 22 du panneau 2 au voisinage de son chant 21. L'élément support et le ou les éléments guides peuvent coopérer par d'autres moyens que des nervures et des rainures. Les faces externes planes 565 de l'élément guide peuvent être remplacées, dans leur fonction de coopération avec les chevilles 3, par des saillies, par exemple par des nervures dont l'extrémité, en position de service, est adjacente à la face 22 ou proche de celle-ci. Il est clair également que l'appui de l'élément support contre la face 22 et le chant 11 peut être obtenu par d'autres moyens que des faces planes. Il n'est pas indispensable de prévoir une arête de l'élément support venant dans le plan des axes des canons de perçage. L'alignement du dispositif par rapport à une ligne tracée à l'avance peut être obtenu par d'autres moyens, par exemple des repères présents aux extrémités de l'élément guide, comme décrit plus haut.

## Revendications

1. Dispositif de guidage pour le perçage de panneaux de bois ou analogues en vue de leur assemblage par chevilles, comprenant un élément de base (4) présentant une surface d'appui (44) pour un chant (21) d'un second panneau (2) dont une face (22) est à percer à une distance déterminée petite (d) de ce chant, et muni de moyens (43, 46) pour son immobilisation par rapport au second panneau, ce dispositif possédant des canons de perçage (52) pour le perçage de ladite face (22) du second panneau et d'un chant (11) d'un premier panneau (1) fixé à plat sur ladite face (22), lesdits chants respectifs (11, 21) des deux panneaux étant parallèles entre eux et décalés de façon à dégager la zone de perçage de ladite face, caractérisé en ce que les canons de perçage (52) appartiennent à un seul élément guide (5) supporté par l'élément de base ou élément support (4) et présentant une surface d'appui pour ledit chant (11) à percer, dans laquelle débouchent lesdits canons de perçage (52), des moyens de coulissement mutuel (47, 51) de l'élément support (4) et du premier élément guide (5) perpendiculairement aux faces des panneaux étant prévus pour ajuster la position du premier élément guide en fonction de l'épaisseur du premier panneau, et en ce que le seul élément guide (5) est supporté par l'élément support (4) dans deux positions, l'une avec les canons de perçage en regard du chant à percer du premier panneau et l'autre avec les canons de perçage en regard de la face à percer du second panneau.

2. Dispositif selon la revendication 1, caractérisé en ce que l'élément guide présente un rebord (53) parallèle aux axes des canons de perçage, pouvant s'appuyer sur la face (12) du premier panneau opposée au second panneau de façon à positionner les axes des canons de perçage à ladite distance déterminée (d) de ladite face opposée.

3. Dispositif selon la revendication 2, caractérisé en ce que ledit rebord (53) est propre à s'appuyer sur ledit chant (21) du second panneau lorsque le premier élément guide est en position de perçage du second panneau.

4. Dispositif selon l'une des revendications précédentes, caractérisé en ce que l'élément guide est reçu dans un même logement (47) de l'élément support pour ses positions respectives de perçage des deux panneaux.

5. Dispositif selon l'une des revendications 1 à 3, caractérisé en ce que l'élément guide est reçu dans des logements différents (148,149) de l'élément support pour ses positions respectives de perçage des deux panneaux.

6. Dispositif selon l'une des revendications précédentes, caractérisé en ce que l'élément support est également propre à reposer de façon stable sur ladite face du second panneau, pour le perçage de celle-ci à une distance de son chant supérieure à ladite distance déterminée (d), en s'appuyant sur le chant percé (11) du premier panneau fixé à plat sur ladite face, et à y recevoir l'élément guide qui comporte deux canons de perçage (552) reposant également de façon stable sur cette face, avec les canons de perçage en regard de celle-ci, et que l'élément support présente en outre deux moyens d'appui latéraux (565) qui, dans la position ainsi définie, sont adjacents à ladite face (22) et définissent des plans d'appui tangents respectivement aux alésages des canons de perçage (552) et perpendiculaires au chant du premier panneau, la distance (L) entre les plans d'appui étant égale à l'entr'axe des canons de perçage diminué du diamètre de leur alésage.

7. Dispositif selon la revendication 6, caractérisé en ce que les deux moyens d'appui (565) sont situés sur deux côtés opposés de l'élément support.

8. Dispositif selon l'une des revendications 6 et 7, caractérisé en ce que chaque moyen d'appui est une portion de surface externe (565) de l'élément support contenue dans le plan d'appui.

9. Dispositif selon l'une des revendications 6 à 8, caractérisé en ce que l'élément support est propre à s'appuyer sur la face du second panneau et sur le chant du premier panneau par des portions de surface externes planes perpendiculaires entre elles (561, 562).

10. Dispositif selon la revendication 8 et la revendication 9, caractérisé en ce que chaque moyen d'appui (565) forme avec les portions de surface planes (561, 562) un trièdre trirectangle.

11. Dispositif selon la revendication 2 et l'une des revendications 6 à 10, caractérisé en ce que l'élément guide est reçu à plat sur la face (22) du second panneau, ledit rebord (553) étant dirigé à l'opposé du second panneau.

12. Dispositif selon l'une des revendications 6 à 11, caractérisé en ce que l'élément support présente une arête (568) qui vient en contact avec la face du second panneau, dans un plan (P) parallèle au chant du premier panneau et passant par les axes des canons de perçage.

**Claims**

1. Guide device for the piercing of wood panels or the like with a view to their assembly using dowels, comprising a base element (4) having a bearing surface (44) for one edge (21) of a second panel (2) one face (22) of which is to be pierced at a small specified distance (d) from this edge, and provided with means (43, 46) for its immobilisation with respect to the second panel, this device having piercing barrels (52) for the piercing of the said face (23) of the second panel and of one edge (11) of a first panel (1) fixed flat on the said face (22), the said respective edges (11, 21) of the two panels being mutually parallel and offset so as to leave free the piercing zone of the said face, characterised in that the piercing barrels (52) belong to a single guide element (5) supported by the base element or support element (4) and having a bearing surface for the said edge (11) to be pierced, in which bearing surface open the said piercing barrels (52), means (47, 51) for the mutual sliding of the support element (4) and of the first guide element (5) perpendicularly to the faces of the panels being provided in order to adjust the position of the first guide element as a function of the thickness of the first panel; and in that the single guide element (5) is supported by the support element (4) in two positions, one position with the piercing barrels opposite the edge to be pierced of the first panel, and the other position with the piercing barrels opposite the face to be pierced of the second panel.

2. Device according to Claim 1, characterised in that the guide element has a rim (53) parallel to the axes of the piercing barrels and capable of bearing on the face (12) of the first panel opposite the second panel in order to position the axes of the piercing barrels at the said specified distance (d) from the said opposite face.

3. Device according to Claim 2, characterised in that the said rim (53) is capable of bearing on the said edge (21) of the second panel when the first guide element is in the position for piercing the second panel.

4. Device according to one of the preceding claims, characterised in that the guide element is accommodated in a same housing (47) of the support element for its respective positions for piercing the two panels.

5. Device according to one of Claims 1 to 3, characterised in that the guide element is accommodated in different housings (148, 149) of the support element for its respective positions for piercing the two panels.

6. Device according to one of the preceding claims, characterised in that the support element is also capable of resting in a stable manner on the said face of the second panel, for the piercing of this face at a distance from its edge which is greater than the said specified distance (d), bearing on the pierced edge (11) of the first panel fixed flat on the said face, and is capable of receiving there the guide element which comprises two piercing barrels (552) also resting in a stable manner on this face, with the piercing barrels opposite the latter, and in that the support element furthermore has two lateral bearing means (565) which, in the position thus defined, are adjacent to the said face (22) and define bearing planes which are tangential respectively to the bores of the piercing barrels (552) and perpendicular to the edge of the first panel, the distance (L) between the bearing planes being equal to the centre distance between the piercing barrels minus the diameter of their bore.

7. Device according to Claim 6, characterised in that the two bearing means (565) are situated on two opposite sides of the support element.

8. Device according to one of Claims 6 and 7, characterised in that each bearing means is an outer surface portion (565) of the support element, which portion is contained within the bearing plane.

9. Device according to one of Claims 6 to 8, characterised in that the support element is capable of bearing on the face of the second panel and on the edge of the first panel by mutually perpendicular, plane outer surface portions (561, 562).

10. Device according to Claim 8 and Claim 9, characterised in that each bearing means (565) forms, with the plane surface portions (561, 562), a trihedral.

11. Device according to Claim 2 and one of Claims 6 to 10, characterised in that the guide element is received flat on the face (22) of the second panel, the said rim (553) pointing away from the second panel.

12. Device according to one of Claims 6 to 11, characterised in that the support element has a sraight edge (568) which comes into contact with the face of the second panel, in a plane (P) parallel to the edge of the first panel and passing through the axes of the piercing barrels.

**Patentansprüche**

1. Bohrvorrichtung für Holzpaneele od. dgl. bei ihrem Zusammenbau durch Dübel, enthaltend ein Grundelement (4) mit einer Stützfläche (44) für eine Stirnfläche (21) eines zweiten Holzpaneels (2), dessen eine Breitseite (22) in einem bestimmten kleinen Abstand (d) von dieser Stirnfläche gebohrt werden soll und mit Mitteln (43,46) für seine Festlegung bezüglich des zweiten Paneels, und Bohrbuchsen (52) zum Bohren der genannten Breitseite (22) des zweiten Paneels und einer Stirnfläche (11) eines ersten Paneels (1), das auf der genannten Breitseite (22) eben aufliegend befestigt ist, wobei die betreffenden Stirnflächen (11,21) der beiden Paneele parallel und derart versetzt zueinander angeordnet sind, daß die Bohrzone der genannten Breitseite freiliegt, dadurch gekennzeichnet, daß die Bohrbuchsen (52) einem einzigen, vom Basis- oder Tragelement (4) getragenen Führungselement (5) angehören, das eine Stutzfläche für die genannte, zu bohrende Stirnfläche (11) aufweist, in die die Bohrbuchsen (52) münden, daß gegenseitige, senkrecht zu den Breitseiten der Paneele angeordnete Gleitführungsmittel (47,51) für das Stützelement (4) und das einzige Führungselement (5) dazu vorgesehen sind, die Position des einzigen Führungselements in Abhängigkeit von der Stärke des ersten Paneels einzustellen, und daß das einzige Führungselement (5) durch das Tragelement (4) in zwei Stellungen tragbar ist, wobei dei Bohrbuchsen in der einen Stellung auf die zu bohrende Stirnseite des ersten Paneels und in der anderen Stellung auf die zu bohrende Breitseite des zweiten Paneels ausgerichtet sind.

2. Bohrvorrichtung nach Anspruch 1, dadurch gekennzeichnet, daß das Führungselement einen parallel zu den Achsen der Bohrbuchsen verlaufenden Randabschnitt (53) aufweist, der sich auf der vom zweiten Paneel abgewandten Breitseite (12) des ersten Paneels derart abstützen kann, daß die Achsen der Bohrbuchsen mit dem bestimmten Abstand (d) von der genannten abgewandten Breitseite positioniert sind.

3. Bohrvorrichtung nach Anspruch 2, dadurch gekennzeichnet, daß der Randabschnitt (53) geeignet ist, sich auf der besagten Stirnfläche (21) des zweiten Paneels abzustützen, wenn das einzige Führungselement in der zum Bohren des zweiten Paneels bestimmten Stellung ist.

4. Bohrvorrichtung nach einem der vorstehenden Ansprüche, dadurch gekennzeichnet, daß das Führungselement zur Herstellung seiner entsprechenden Bohrstellungen für beide Paneele in derselben Aufname (47) des Tragelements aufgenommen ist.

5. Bohrvorrichtung nach einem der Ansprüche 1 bis 3, dadurch gekennzeichnet, daß das Führungselement zur Herstellung seiner entsprechenden Bohrstellungen für beide Paneele in unterschiedlichen Aufnahmen (148,149) des Tragelements aufgenommen ist .

6. Bohrvorrichtung nach einem der vorstehenden Ansprüche, dadurch gekennzeichnet, daß das Tragelement geeignet ist, fest auf die besagte Breitseite des zweiten Paneels aufgelegt zu werden, um dieses mit einem Abstand von seiner Stirnfläche zu bohren, der größer als der bestimmte Abstand (d) ist, indem es an der gebohrten Stirnfläche (11) des ersten, eben auf dieser Breitseite aufliegenden Paneels abgestützt wird, und dann das Führungselement aufzunehmen, das zwei Bohrbuchsen (552) aufweist, die sich ebenfalls fest auf diese Breitseite auflegen bei auf diese ausgerichteten Bohrbuchsen, und daß das Tragelement zwei seitliche Stutzmittel (565) aufweist, die in der so definierten Stellung an die besagte Breitseite (22) angrenzen und bezüglich der Bohrungen der Bohrbuchsen tangentiale, senkrecht zur Stirnfläche des ersten Paneels angeordnete Stützflächen definieren, deren Abstand (L) gleich dem Mittenabstand der Bohrbuchsen abzüglich des Durchmessers von deren Bohrungen ist.

7. Bohrvorrichtung nach Anspruch 6, dadurch gekennzeichnet, daß die beiden Stützmittel (565) an zwei gegenüberliegenden Seiten des Tragelements angeordnet sind.

8. Bohrvorrichtung nach Anspruch 6 oder 7, dadurch gekennzeichnet, daß jedes Stützmittel ein Teil einer in der Stützebene enthaltenen äußeren Oberfläche (565) des Tragelements ist.

9. Bohrvorrichtung nach einem der Ansprüche 6 bis 8, dadurch gekennzeichnet, daß das Tragelement geeignet ist, sich mit äußeren, ebenen, senkrecht zueinander angeordneten Oberflächenabschnitten (561,562) auf der Breitseite des zweiten Paneels und auf der Stirnfläche des ersten Paneels abzustützen.

10. Bohrvorrichtung nach Anspruch 8 und 9, dadurch gekennzeichnet, daß jedes Stützmittel (565) mit den ebenen Oberflächenabschnitten (561,562) einen rechtwinkligen Trieder bildet.

11. Bohrvorrichtung nach Anspruch 2 und einem der Ansprüche 6 bis 10, dadurch gekennzeichnet, daß das Führungselement flach auf der Breitseite (22) des zweiten Paneels aufliegt, wobei der genannte Randabschnitt (553) vom zweiten Paneel weggerichtet ist.

12. Bohrvorrichtung nach einem der Ansprüche 6 bis 11, dadurch gekennzeichnet, daß das Tragelement eine Kante (568) aufweist, die mit der Breitseite des zweiten Paneels in einer Ebene (P) in Berührung kommt, die parallel zur Stirnfläche des ersten Paneels liegt und in der die Achsen der Bohrbuchsen angeordnet sind.

## FIG.1

## FIG.2

FIG. 3

FIG. 4

FIG. 5

FIG. 6

FIG. 7

FIG. 8

EP 0 262 998 B1

## FIG.8A

## FIG.8B

15

FIG.9

FIG.10

FIG.11

16

447    447

445

441

449    449

FIG. 12

440

443

442

404

446

FIG. 13

405    459    451    459

453

452    S    F    452

EP 0 262 998 B1

FIG.14

FIG.15

18

## FIG. 16

## FIG. 17